# EUROPÄISCHE PATENTSCHRIFT

(11) **EP 3 450 641 B1**
(45) Veröffentlichungstag und Bekanntmachung des Hinweises auf die Patenterteilung: **24.03.2021**
(21) Anmeldenummer: 18189495.7
(22) Anmeldetag: 17.08.2018
(51) Int. Cl.: E04B 1/66, G01M 3/20

(54) **VERFAHREN ZUR PRÜFUNG DER DICHTHEIT EINES BITUMINÖSEN BELAGS**
METHOD FOR TESTING THE TIGHTNESS OF A BITUMINOUS PAVEMENT
PROCÉDÉ DE VÉRIFICATION D'ÉTANCHÉITÉ D'UN REVÊTEMENT BITUMINEUX

(30) Priorität: 28.08.2017 FR 1757923
(43) Veröffentlichungstag der Anmeldung: 06.03.2019
(73) Patentinhaber: ICOPAL SAS, 92184 Antony Cedex (FR)
(72) Erfinder: SAHM, Thomas, 91190 GIF SUR YVETTE (FR); ROUX, Gilles, 93600 AULNAY SOUS BOIS (FR)
(74) Vertreter: Stoffregen, Hans-Herbert

(56) Entgegenhaltungen:
- FR-A1- 2 998 313
- JP-A- 2004 137 880
- US-A- 5 143 568

## Beschreibung

Die Erfindung betrifft ein Verfahren zur Prüfung der Dichtheit eines bituminösen Belags, der aus zumindest zwei bituminösen Abdichtungs-Membranen besteht, von denen zumindest eine zumindest an einem ihrer Ränder auf einer Seite der Membran ein Element aufweist, das, wenn die Membran auf einer abzudichtenden Fläche verlegt wurde, einen Kanal bildet, wobei das Element gasdurchlässig ist und zumindest zum Teil aus einem flexiblen und gegenüber geschmolzenem Bitumen dichten Material besteht, wobei die beiden Membranen an einem ihrer Ränder mit einem Überlappungsbereich verlegt werden und das Element zwischen den beiden Membranen in dem Überlappungsbereich angeordnet ist, wobei die Prüfung durch Einblasen von Gas in den Kanal erfolgt.

Im Folgenden wird unter bituminöser Membran eine auf Bitumen basierende Membran oder eine auf Bitumen basierende Geomembran verstanden. Derartige Membranen sind im Allgemeinen als Streifen oder flexible Bahnen mit einer Länge von 5 bis 100 m und einer Breite zwischen 0,2 und 6 m ausgebildet und auf Rollen aufgewickelt.

Die vorgefertigten bituminösen Abdichtungs-Streifen oder -Bahnen werden dicht zusammengefügt, indem zwei Streifen auf einer Breite von 5 bis 20 cm übereinandergelegt und mit einem Propan- oder Heißluftschweißgerät verschweißt werden, wobei diese Überlappungsbereiche, auch Überlappungsstöße genannt, eine Dichtheit aufweisen müssen, die der Dichtheit des gesamten Streifens gleichwertig ist.

Aus der FR 2 998 313 A1 ist eine bituminöse Abdichtungs-Membran bekannt, die zumindest an einem ihrer Ränder auf einer Seite der Membran ein integriertes Element umfasst, das, wenn die Membran auf einer abzudichtenden Fläche verlegt wurde, einen Kanal bildet. Dieses Element ist gasdurchlässig und besteht zumindest zum Teil aus einem flexiblen und gegenüber geschmolzenem Bitumen dichten Material und wird auf der einen Seite der Membran befestigt.

Gemäß dieser Schrift erfolgt ein Verfahren zur Prüfung der Dichtheit eines bituminösen Belags, bestehend aus zumindest zwei bituminösen Abdichtungs-Membranen, die an einem ihrer Ränder mit einem Überlappungsstoß verlegt sind, durch das Einblasen in den Kanal von unter Druck stehendem Gas, vorzugsweise von Luft mit einem Druck zwischen 1 und 4 bar. Das Element wird zwischen den beiden Membranen im Überlappungsstoß angeordnet und an einem Punkt des Überlappungsstoßes das unter Druck stehende Gas in den Kanal eingeblasen, wobei der Druck des Gases geprüft wird und eine Abnahme des Drucks ein Problem mit der Dichtheit im Überlappungsstoß erkennen lässt.

Bei diesem Prüfungsverfahren tritt folgendes technische Problem auf: Der Druck der eingeblasenen Luft bewirkt, dass sich der Überlappungsstoß relativ stark verformt, was dazu führen kann, dass der Stoß, insbesondere, wenn die Umgebungstemperatur relativ hoch ist, durch den Druck reißt und die beiden Membranen sich teilweise voneinander lösen.

Der US 5 143 568 ist ein Verfahren zur Dichtigkeitsprüfung von sich überlappenden Dachbahnen zu entnehmen. Hierzu sind die Dachbahnen im Überlappungsbereich derart miteinander verbunden, dass sich ein Hohlraum bildet, der mit Druckluft beaufschlagt wird, um anhand der Berandung des druckbeaufschlagten Hohlraums Rückschlüsse über die Dichtheit zu ziehen.

Der JP 2004/137880 A ist ein Verfahren zur Überprüfung der Dichtheit von sich überlappenden Dachbahnen zu entnehmen. Im Überlappungsbereich wird ein aus Fasern bestehendes Rohr angeordnet, das Öffnungen aufweist, über die dann Luft austritt, wenn das Rohr mit Druckluft beaufschlagt wird. Sind Undichtheiten im Überlappungsbereich vorhanden, so zeigt sich dies an entsprechenden Verformungen in der Schweißnaht.

Aufgabe der vorliegenden Erfindung ist es, die Nachteile des Standes der Technik zu vermeiden und ein Verfahren zur Überprüfung der Dichtheit des von abdichtenden bituminösen Lagen prüfen zu können, ohne dass sich dies nachteilig auf die Beläge und insbesondere den Überlappungsbereich auswirkt.

Die Erfindung löst dieses Problem und schlägt dazu ein Verfahren gemäß Anspruch 1 und eine Verwendung gemäß Anspruch 6 vor.

Auf Grund der erfindungsgemäßen Lehre kann mit einfachen Maßnahmen die Dichtheit von sich überlappenden Membranen bzw. Dachbahnen in ihren Schweißnähten ermittelt werden. Da das Gas erschnüffelt wird, kann zudem präzise die Stelle der Undichtheit ermittelt und sodann eine Reparatur vorgenommen werden.

Das Test- oder Spürgas kann aus 95,5 % Stickstoff und 4,5 % Wasserstoff oder Helium bestehen.

Das Test- oder Spürgas wird vorzugsweise mit einem Druck von 0,001 bis 0,1 bar und vorteilhafterweise mit einem Druck von im Wesentlichen 0,01 bar über Atmosphärendruck in den Kanal eingeblasen.

Die Erfindung betrifft darüber hinaus eine bituminöse Abdichtungsmembran für die Umsetzung eines derartigen Verfahrens, wobei das Element ein Schlauch, insbesondere zylindrischer Schlauch, aus Glasfasergeflecht oder -gewebe ist.

Der Schlauch kann einen Innendurchmesser von vorteilhafterweise 10 bis 12 Millimeter aufweisen.

Der Durchmesser der Glasfasern ist vorzugsweise größer oder gleich 6 Mikrometer.

Die Wanddicke des Schlauchs beträgt vorteilhafterweise im Wesentlichen 0,25 Millimeter.

Dank dieser Abmessungen wird sichergestellt, dass das durch die Flamme des Brenners geschmolzene und in den flüssigen Zustand gebrachte Bitumen während des Verschweißens des Überlappungsstoßes nicht in das Element wie den Schlauch gelangt, dieser jedoch das Gas durchlässt.

Der integrierte Schlauch ist vorzugsweise an nur einem Längsrand der Membran angeordnet.

Der integrierte Schlauch ist vorzugsweise auf der Oberseite der Membran angeordnet, d.h. auf der Seite der verlegten Membran, die zu dem abzudichtenden Bauwerk abgewandt verläuft.

Die Membran ist vorzugsweise vorgefertigt, wobei der Schlauch auf der einen Seite der Membran befestigt wurde, bevor diese auf der abzudichtenden Fläche verlegt wird.

Weitere Einzelheiten, Vorteile und Merkmale der Erfindung ergeben sich nicht nur aus den Ansprüchen, den diesen zu entnehmenden Merkmalen -für sich und/oder in Kombination-, sondern auch aus der nachfolgenden Beschreibung von der Zeichnung zu entnehmenden bevorzugten Ausführungsbeispielen.

Die Erfindung wird nachstehend anhand der Figuren, die nur eine bevorzugte Ausführungsform der Erfindung zeigen, detaillierter beschrieben.
Die Figur 1 zeigt eine Ansicht einer erfindungsgemäßen Membran.
Die Figur 2 zeigt eine Teilansicht eines Querschnitts zweier erfindungsgemäßer Membranen, die auf einer abzudichtenden Fläche verlegt werden, wie z.B. Dach, insbesondere Flachdach, bekiestes Dach, Terrasse, Balkon. Die Membrane können aber auch z.B. zur Abdichtung von Deponien benutzt werden.

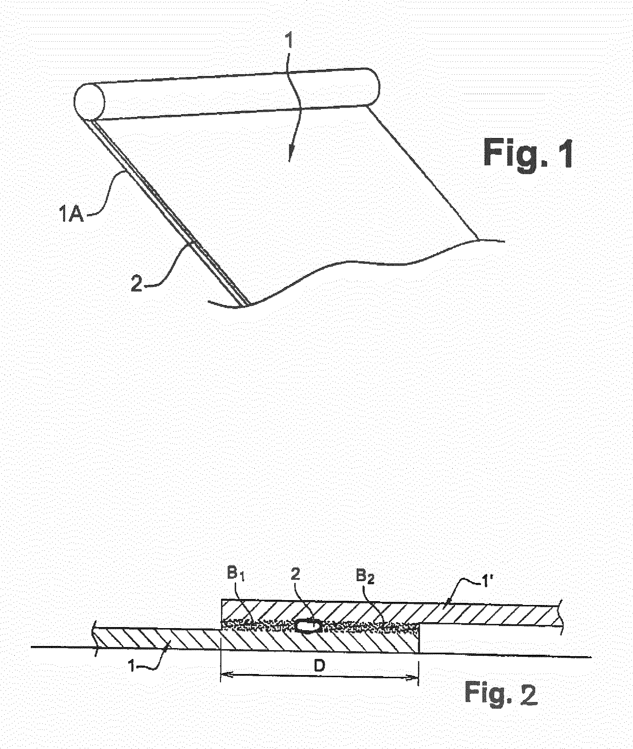

Wie in der Figur 1 gezeigt, umfasst eine erfindungsgemäße, als Bahn oder Streifen ausgebildete bituminöse Abdichtungs-Membran 1 vorzugsweise an einem ihrer Längsränder 1A auf einer Oberseite der Membran ein integriertes Element 2, das, wenn die Membran 1 auf einer abzudichtenden Fläche 3 neben einer anderen Membran 1' verlegt wurde, einen Kanal bildet.

Ebenfalls erfindungsgemäß kann dieses Element 2 auch an einem nicht längs ausgerichteten Rand oder an zwei Längsrändem der Membran 1 angeordnet werden. Es kann auch auf der Unterseite der Membran 1 angeordnet werden.

Die Membran 1 ist hier vorgefertigt, wobei das Element 2 auf der einen Seite der Membran befestigt wurde, bevor diese auf der abzudichtenden Fläche 3 verlegt wird.

Dieses Element 2 ist gasdurchlässig und besteht aus einem flexiblen und gegenüber geschmolzenem Bitumen dichten Material und wird vorzugsweise während der Herstellung der Membran 1 durch Verschmelzen des Bitumens auf der einen Seite der Membran befestigt. Das Material ist vorzugsweise bei einer Temperatur von mindestens 300 °C, die der Auslege- und Verschweißtemperatur eines Überlappungsstoßes entspricht, feuerfest.

Das Verlegen derartiger Membranen auf einer abzudichtenden Fläche wird in der Figur 2 dargestellt, in der zwei erfindungsgemäße Membranen 1, 1' teilweise dargestellt sind.

Die erste Membran 1 wird auf der abzudichtenden Fläche 3 verlegt und weist sein integriertes Element 2 auf der Oberseite im Wesentlichen auf der Mittelachse des Überlappungsbereiches D auf. Um den Belag zum Abdichten zu bilden, wird die zweite Membran 1' neben der ersten Membran 1 derart verlegt, dass sich der Überlappungsbereich D ergibt. In diesem Überlappungsbereich D werden die beiden Membranen 1, 1' mit einem Schweißgerät oder heißer Luft durch das Verschmelzen ihres Bitumens B1, B2 auf der Oberseite der ersten Membran 1 und der Unterseite der zweiten Membran 1' verschweißt.

Das integrierte Element 2, das im Wesentlichen aus einem bei Temperaturen bis zu mindestens 300 °C beständigen und gegenüber geschmolzenem Bitumen dichten Material besteht, wird während des Verschmelzens weder beschädigt noch zerstört. Um einen kompletten Belag zu bilden, wird eine Vielzahl derartiger Membranen »schuppenartig« angeordnet. Eine Vielzahl von entsprechenden Überlappungsbereichen D mit integrierten Elementen werden gebildet.

Wie vorstehend ausgeführt, kann das integrierte Element 2 auch an zwei Längsrändern der Membran 1 angeordnet sein. In diesem Fall ist die erste Membran 1 eine erfindungsgemäße Membran mit zwei integrierten Elementen 2 und die zweite Membran 1' ist eine konventionelle Membran ohne integriertes Element 2. Um einen kompletten Belag zu bilden, wird eine Vielzahl derartiger Membranen abwechselnd angeordnet.

Wie ebenfalls vorstehend ausgeführt, kann das integrierte Element 2 auf der Unterseite der Membran angeordnet sein und gemäß der Anordnung in Figur 2 der Rand der ersten Membran 1 ohne ein integriertes Element 2 und der Rand der zweiten Membran 1' mit einem integrierten Element 2 versehen sein.

Das integrierte Element 2 ist vorzugsweise ein zylindrischer Schlauch aus Glasfasergeflecht bzw. -gewebe. Diese Glasfasern können durchgehend oder texturiert und verdrillt sein.

Der Schlauch, also das Element 2, weist einen Innendurchmesser von 6 bis 15 Millimeter und vorteilhafterweise von 10 bis 12 Millimeter auf. Der Durchmesser der Glasfasern ist vorzugsweise größer oder gleich 6 Mikrometer. Die Wanddicke des Schlauchs beträgt vorteilhafterweise im Wesentlichen 0,25 Millimeter.

Gemäß der Erfindung besteht ein Verfahren zur Prüfung der Dichtheit eines bituminösen Belags bestehend aus zumindest zwei vorgefertigten bituminösen Abdichtungs-Membranen 1, 1', die wie in der Figur 2 dargestellt an einem ihrer Ränder mit einem Überlappungsbereich D verlegt sind, darin, Spürgas in das den Kanal bildende integrierte Element 2 einzublasen.

Das integrierte Element 2 ist zwischen zwei Membranen 1, 1' in dem Überlappungsbereich D angeordnet und ein Test- oder Spürgas, vorzugsweise eine Mischung aus 95,5 % Stickstoff und 4,5 % Wasserstoff - wie ein Gas mit der Bezeichnung Nidron - oder aus Helium, wird bei einem Druck von 0,001 bis 0,1 bar über Umgebungsdruck bzw.

Atmosphärendruck und vorteilhafterweise bei einem Druck von im Wesentlichen 0,01 bar an einem Punkt des Überlappungsstoßes bzw. -bereiches D in den Kanal eingeblasen, wobei zumindest ein Ende des Kanals verschlossen ist und entlang des Überlappungsstoßes eine Prüfung auf das Vorhandensein bestimmter Moleküle des Spürgases in der Umgebungsluft stattfindet, wobei durch das eine normale Schwelle übersteigende Vorhandensein der Moleküle ein Problem mit der Dichtheit im Überlappungsstoß bzw. -bereich D erkannt werden kann.

Bei diesem Punkt kann es sich um eine Öffnung am Endes des Kanals, am Rand der mit einem integrierten Element 2 versehenen Membran 1 oder einen beliebigen Punkt des Überlappungsstoßes bzw. -bereiches D handeln, wobei das Gas dann durch einen der Streifen 2A des integrierten Elements 2 hindurch, zum Beispiel mittels einer Nadel, eingeblasen wird.

Eine zum Beispiel rollende Vorrichtung zur Erkennung der betreffenden Moleküle, zum Beispiel Stickstoff oder Helium, wird zur Erkennung einer Austrittstelle entlang des Überlappungsstoßes bewegt. So kann beispielsweise ab einer Schwelle von 50 ppm (Anteile pro Millionen) eine Erkennung stattfinden.

## Patentansprüche

1. Verfahren zur Prüfung der Dichtheit eines bituminösen Belags, der aus zumindest zwei bituminösen Abdichtungs-Membranen (1, 1') besteht, von denen zumindest eine zumindest an einem ihrer Ränder (1A) auf einer Seite der Membran ein Element (2) aufweist, das, wenn die Membran auf einer abzudichtenden Fläche verlegt wurde, einen Kanal bildet, wobei das Element gasdurchlässig ist und zumindest zum Teil aus einem flexiblen und gegenüber geschmolzenem Bitumen dichten Material besteht, wobei die beiden Membranen an einem ihrer Ränder mit einem Überlappungsbereich (D) verlegt werden und das Element zwischen den beiden Membranen in dem Überlappungsbereich (D) angeordnet ist, wobei die Prüfung durch Einblasen von Gas in den Kanal erfolgt, wobei das Element (2) ein Schlauch aus Glasfasergeflecht oder -gewebe ist, **dadurch gekennzeichnet,**
**dass** der Schlauch einen Innendurchmesser von 6 mm bis 15 mm aufweist, und dass in den Kanal an einem Punkt des Überlappungsbereiches D ein Test- oder Spürgas eingeblasen wird und entlang des Überlappungsbereiches (D) eine Prüfung auf das Vorhandensein bestimmter Moleküle des Test- oder Spürgases in der Umgebungsluft stattfindet, wobei durch das eine normale Schwelle übersteigende Vorhandensein der Moleküle ein Problem mit der Dichtheit im Überlappungsbereich erkennen lässt.

2. Verfahren nach Anspruch 1,
**dadurch gekennzeichnet,**
**dass** das Test- oder Spürgas aus 95,5 % Stickstoff und 4,5 % Wasserstoff besteht.

3. Verfahren nach Anspruch 1,
**dadurch gekennzeichnet,**
**dass** das Test- oder Spürgas Helium enthält oder aus Helium besteht.

4. Verfahren nach einem der voranstehenden Ansprüche,
**dadurch gekennzeichnet,**
**dass** das Test- oder Spürgas mit einem Druck von 0,001 bis 0,1 bar über Atmosphärendruck in den Kanal eingeblasen wird.

5. Verfahren nach dem voranstehenden Anspruch,
**dadurch gekennzeichnet,**
**dass** das Test- oder Spürgas mit einem Druck von im Wesentlichen 0,01 bar über Atmosphärendruck in den Kanal eingeblasen wird.

6. Verwendung eines Schlauchs aus Glasfasergeflecht oder -gewebe mit einem Innendurchmesser von 6 mm bis 15 mm zur Durchführung des Verfahrens nach zumindest Anspruch 1 zur Prüfung der Dichtheit eines bituminösen Belags.

7. Verwendung nach Anspruch 6,
**dadurch gekennzeichnet,**
**dass** der Schlauch einen Innendurchmesser von 10 bis 12 Millimeter aufweist.

8. Verwendung nach einem der Ansprüche 6 und 7,
**dadurch gekennzeichnet,**
**dass** der Durchmesser der Glasfaser größer oder gleich 6 Mikrometer ist.

9. Verwendung nach Anspruch 6,
**dadurch gekennzeichnet,**
**dass** die Wanddicke des Schlauchs im Wesentlichen 0,25 Millimeter beträgt.

10. Verwendung nach einem der Ansprüche 6 bis 9,
**dadurch gekennzeichnet,**
**dass** der Schlauch an nur einem Längsrand (1A) der Membran (1) angeordnet ist.

11. Verwendung nach einem der Ansprüche 6 bis 10,
**dadurch gekennzeichnet,**
**dass** der Schlauch auf der Oberseite der Membran (1) angeordnet ist.

12. Verwendung nach einem der Ansprüche 6 bis 11,
**dadurch gekennzeichnet,**
**dass** die Membran (1) vorgefertigt ist, wobei der Schlauch auf der einen Seite der Membran (1) befestigt wurde, bevor diese auf der abzudichtenden Fläche verlegt wird.

## Claims

1. Method for testing the tightness of a bituminous covering, consisting of at least two bituminous sealing membranes (1, 1') of which at least one has at least on one of its edges (1A) on one side of the membrane an element (2) which, when the membrane has been laid onto a surface to be sealed, forms a channel, said element being gas-permeable and consisting at least in part of a flexible material tight against molten bitumen, the two membranes being laid with an overlap area (D) at one of their edges and the element being arranged in the overlap area (D) between the two membranes, testing being achieved by blowing gas into the channel, and the element (2) being a tube of glass fiber braid or fabric,
wherein
the tube has an internal diameter of 6 mm to 15 mm, and a test or tracer gas is blown into the channel at a point of the overlap area D and testing takes place along the overlap area (D) for the presence of certain molecules of the test or tracer gas in the ambient air, a problem with the tightness in the overlap area being indicated by the presence of molecules exceeding a normal threshold.

2. Method according to claim 1,
wherein
the test or tracer gas consists of 95.5 % nitrogen and 4.5 % hydrogen.

3. Method according to claim 1,
wherein
the test or tracer gas contains or consists of helium.

4. Method according to one of the previous claims,
wherein
the test or tracer gas is blown into the channel at a pressure of 0.001 to 0.1 bar above atmospheric pressure.

5. Method according to the previous claim,
wherein
the test or tracer gas is blown into the channel at a pressure of substantially 0.01 bar above atmospheric pressure.

6. Use of a tube of glass fiber braid or fabric with an internal diameter of 6 mm to 15 mm for performing the method according to at least claim 1 for testing the tightness of a bituminous covering.

7. Use according to claim 6,
wherein
the tube has an internal diameter of 10 to 12 millimeters.

8. Use according to one of claims 6 and 7,
wherein
the diameter of the glass fiber is greater than or equal to 6 micrometers.

9. Use according to claim 6,
wherein
the wall thickness of the tube is substantially 0.25 millimeters.

10. Use according to one of claims 6 to 9,
wherein
the tube is arranged on only one longitudinal edge (1A) of the membrane (1).

11. Use according to one of claims 6 to 10,
wherein
the tube is arranged on the upper side of the membrane (1).

12. Use according to one of claims 6 to 11,
wherein
the membrane (1) is prefabricated, the tube being fastened on the one side of the membrane (1) before the latter is laid onto the surface to be sealed.

## Revendications

1. Procédé de vérification d'étanchéité d'un revêtement bitumineux, constitué d'au moins deux membranes d'étanchéité bitumineuses (1, 1') dont au moins l'une présente au moins sur un de ses bords (1A) sur une face de la membrane un élément (2) qui, une fois la membrane mise en place sur une surface à étancher, forme un canal, sachant que ledit élément est perméable aux gaz et constitué au moins partiellement d'un matériau souple et étanche au bitume fondu, sachant que ces deux membranes sont posées avec une zone de recouvrement (D) sur un de leurs bords et que ledit élément est disposé entre les deux membranes dans ladite zone de recouvrement (D), sachant que la vérification est effectuée par injection de gaz dans ledit canal, sachant que l'élément (2) est un tube constitué de fibres de verre tissées ou d'un tissu de fibres de verre,
**caractérisé en ce**
**que** le tube présente un diamètre intérieur compris entre 6 mm et 15 mm, et qu'un gaz traceur ou témoin est injecté dans ledit canal en un point de la zone de recouvrement (D) et que la présence de molécules spécifiques audit gaz traceur ou témoin dans l'air ambiant est contrôlée le long de ladite zone de recouvrement (D), sachant qu'une présence desdites molécules dépassant un seuil normal signale un problème d'étanchéité dans ladite zone de recouvrement.

2. Procédé selon la revendication 1,
**caractérisé en ce**
**que** ledit gaz traceur ou témoin est composé de 95,5 % d'azote et de 4,5 % d'hydrogène.

3. Procédé selon la revendication 1,
**caractérisé en ce**
**que** ledit gaz traceur ou témoin contient de l'hélium ou est composé d'hélium.

4. Procédé selon l'une des revendications précédentes,
**caractérisé en ce**
**que** ledit gaz traceur ou témoin est injecté dans ledit canal à une pression située entre 0,001 et 0,1 bar au-dessus de la pression atmosphérique.

5. Procédé selon la revendication précédente,
**caractérisé en ce**
**que** ledit gaz traceur ou témoin est injecté dans ledit canal à une pression sensiblement égale à 0,01 bar au-dessus de la pression atmosphérique.

6. Utilisation d'un tube en fibres de verre tissées ou en tissu de fibres de verre avec un diamètre intérieur compris entre 6 mm et 15 mm pour réaliser le procédé selon au moins la revendication 1 pour la vérification d'étanchéité d'un revêtement bitumineux.

7. Utilisation selon la revendication 6,
**caractérisée en ce**
**que** ledit tube a un diamètre intérieur compris entre 10 et 12 millimètres.

8. Utilisation selon les revendications 6 et 7,
**caractérisée en ce**
**que** le diamètre desdites fibres de verre est supérieur ou égal à 6 microns.

9. Utilisation selon la revendication 6,
**caractérisée en ce**
**que** l'épaisseur de la paroi dudit tube est sensiblement égale à 0,25 millimètres.

10. Utilisation selon l'une des revendications 6 à 9
**caractérisée en ce**
**que** ledit tube est disposé sur un seul bord longitudinal (1A) de la membrane (1).

11. Utilisation selon l'une des revendications 6 à 10,
**caractérisée en ce**
**que** ledit tube est disposé sur la face supérieure de la membrane (1).

12. Utilisation selon l'une des revendications 6 à 11,
**caractérisée en ce**
**que** la membrane (1) est préfabriquée, sachant que ledit tube est fixé sur ladite une face de la membrane (1) avant la pose de celle-ci sur la surface à étancher.
